# EUROPÄISCHE PATENTSCHRIFT

(11) **EP 2 377 596 B1**
(45) Veröffentlichungstag und Bekanntmachung des Hinweises auf die Patenterteilung: **06.01.2016**
(21) Anmeldenummer: 10159958.7
(22) Anmeldetag: 14.04.2010
(51) Int. Cl.: B01D 53/26, F28F 3/02, F28D 9/00, F28D 20/02, F28D 7/00

(54) **KÄLTETROCKNER, INSBESONDERE DRUCKLUFTKÄLTETROCKNER, SOWIE WÄRMETAUSCHER FÜR EINEN KÄLTETROCKNER, INSBESONDERE DRUCKLUFTKÄLTETROCKNER**
REFRIGERANT TYPE DRYER, IN PARTICULAR PRESSURISED AIR REFRIGERANT TYPE DRYER AND HEAT EXCHANGER FOR A REFRIGERANT TYPE DRYER, IN PARTICULAR PRESSURISED AIR REFRIGERANT TYPE DRYER
DISPOSITIF DE SÉCHAGE À FROID, NOTAMMENT DISPOSITIF DE SÉCHAGE À FROID À AIR COMPRIMÉ, AINSI QU'ÉCHANGEUR DE CHALEUR POUR UN DISPOSITIF DE SÉCHAGE À FROID, NOTAMMENT DISPOSITIF DE SÉCHAGE À FROID À AIR COMPRIMÉ

(43) Veröffentlichungstag der Anmeldung: 19.10.2011
(73) Patentinhaber: KAESER KOMPRESSOREN SE, 96450 Coburg (DE)
(72) Erfinder: Foerster, Andreas Dr., 96487 Dörfles-Esbach (DE); Fredenhagen, Andreas Dr., 96450 Coburg (DE); Feisthauer, Michael, 96484 Meeder (DE); Walter, Andreas, 77815 Bühl (DE); Dering, Kristian, 96450 Coburg (DE)
(74) Vertreter: Zech, Stefan Markus

(56) Entgegenhaltungen:
- EP-A1- 2 108 910
- EP-A1- 2 169 339
- EP-A2- 1 081 445
- DE-A1- 3 428 335
- DE-A1- 10 030 627

## Beschreibung

Die Erfindung betrifft einen Wärmetauscher für einen Kältetrockner, insbesondere für einen Druckluftkältetrockner, nach Anspruch 1 sowie einen Kältetrockner, insbesondere Druckluftkältetrockner, nach Anspruch 15.

Wenn (komprimierte) Gase, wie beispielsweise Druckluft, zum Einsatz kommen, ist es oftmals nötig oder zumindest erwünscht, kondensierbare Bestandteile aus dem Gas zu entfernen. Ein im Stand der Technik bekanntes Verfahren hierzu ist die so genannte Kältetrocknung, das heißt das Abkühlen des Gases mit einem Kältekreislauf auf eine niedrige Temperatur und dem Abscheiden der auskondensierten Bestandteile. Üblicherweise ist hierbei ein zusätzlicher Gegenstromwärmetauscher vorgesehen, durch den das eintretende zu trocknende Gas durch das kalte ausströmende Gas abgekühlt werden kann, so dass einerseits die erforderliche Kälteleistung und andererseits die relative Feuchtigkeit des austretenden Gases reduziert werden kann.

Bedingt durch äußere Bedingungen, wie beispielsweise unterschiedliche Einsatztemperaturen und/oder unterschiedliche Eingangsvolumenströme ist eine für die Kühlung notwendige Kälteleistung oftmals starken Schwankungen unterworfen. Die Kälteleistung muss bei derartigen Schwankungen angepasst werden, da es bei einer zu starken Kühlung zu einer Erstarrung der kondensierbaren Komponenten kommen kann, was zur Verstopfung und/oder Schädigung des Wärmetauschers führen kann. Steuerungstechnisch kann die Leistungsanpassung dadurch erfolgen, dass ein Kältekompressor bei einer unteren Temperaturgrenze abgeschaltet wird und bei einer oberen Temperaturgrenze und/oder nach einer bestimmten Zeit wieder eingeschaltet wird (Ein-Aus-Regelung). Bei einer derartigen Methode kommt es jedoch noch zu vergleichsweise großen Schwankungen des Temperaturverlaufs der abgekühlten Luft und damit zu vergleichsweise großen Schwankungen des erreichbaren Drucktaupunktes.

Eine Ein-Aus-Regelung mit vergleichsweise geringen Drucktaupunktschwankungen ist im Stand der Technik, nämlich der EP 0 405 613 B1, beschrieben. Dabei wird die Kälteleistung, die beim Betrieb des Kältekreislaufes im Überschuss erzeugt wird, wirksam gespeichert und beim Stillstand des Kältekreislaufes an das zu kühlende Gas wieder abgegeben. Der im Stand der Technik bekannte Wärmetauscher weist Quarzsand als Speichermasse zwischen dem Kältefluid und dem zu trocknenden Luftstrom auf. Der bekannte Wärmetauscher ermöglicht einen Betrieb mit vergleichsweise geringen Drucktaupunktschwankungen, erfordert jedoch ein erhebliches Bauvolumen, um die erforderlichen Austauschflächen zu realisieren. Damit verbunden ist ein hoher Materialaufwand an vergleichsweise teuren Materialien sowie ein hohes Gewicht des Wärmetauschers und des Speichermaterials. Dadurch ist der Trockner verhältnismäßig teuer, schwer und benötigt eine größere Stellfläche als ein Standardtrockner.

In der DE 199 43 109 C1 wird eine andere Lösung hinsichtlich des Problems von Schwankungen des Drucktaupunktes vorgeschlagen. Gemäß DE 199 43 109 C1 wird ein "Standardwärmetauscher" im Zusammenhang mit einem umlaufenden Kältefluid vorgeschlagen, der wiederum von einem Kältekreislauf gekühlt wird. Durch den Kältekreislauf wird eine Eis-Wasser-Mischung erzeugt. Die Speicherung erfolgt im Kältefluid. Auch in diesem Zusammenhang ist jedoch der Bauaufwand aufgrund des zweiten benötigten Wärmetauschers und einer Pumpe zum Pumpen der Eis-Wasser-Mischung nicht unerheblich. Weiterhin ist die Energieeffizienz durch die mehrfachen Wärmeübergänge und den Einsatz der Pumpe verringert. Die Pumpe benötigt einerseits elektrische Antriebsleistungen und erhöht andererseits durch den Wärmeeintrag ins Kältefluid die erforderliche Kälteleistung und damit den Leistungsbedarf des Kältekompressors.

In der US 7 134 483 B2 wird vorgeschlagen, ein Latentwärmespeichermaterial in einer Platte vorzusehen, wobei die Platte sowohl eine Kältemittelplatte als auch eine Luftplatte kontaktiert. In konstruktiver Hinsicht bleiben jedoch viele Fragen offen. Eine konkrete Beschreibung, wie die Platten gestaltet werden könnten, ist in der US 7 134 483 B2 nicht enthalten. Insgesamt scheint auch die Ausgestaltung gemäß US 7 134 483 B2 vergleichsweise ineffizient zu sein.

In der DE 103 11 602 A1 wird vorgeschlagen, in einem Randbereich eines Gas-Kältemittel-Bereiches eines Wärmetauschers einen Thermospeicher vorzusehen. Der Thermospeicher an den Außenseiten des Wärmetauschers ist jedoch vergleichsweise platzaufwendig und führt zu einem wenig energieeffizienten Betrieb des Wärmetauschers.

Der Erfindung liegt allgemein das Problem zugrunde, einen Wärmetauscher für einen Kältetrockner, insbesondere für einen Druckluftkältetrockner, vorzuschlagen, bei dem ein Betrieb mit geringen Drucktaupunktschwankungen ermöglicht ist und gleichzeitig der konstruktive Aufwand (insbesondere hinsichtlich der Platzeinnahme, des Gewichtes und/oder des Materialeinsatzes) vergleichsweise gering ist. Weiterhin soll der Wärmetauscher einen vergleichsweise effizienten Betrieb ermöglichen.

Die EP 1 081 445 offenbart einen Wärmetauscher für einen Druckluftkältetrockner, bei dem eine Ankopplung an einen Kältespeicherraum bewirkt wird. Konkret werden Anströmflächenelemente dort jeweils durch Rohre gebildet. Durch diese Geometrie ist eine Wärmeübertragung zwischen der im Rohr strömenden Druckluft bzw. dem im Rohr strömenden Kältefluid nicht optimal.

Hiervon ausgehend besteht daher für die vorliegende Erfindung die Aufgabe, die wärmetechnische Ankopplung an den Kältespeicherraum insgesamt zu verbessern.

Diese Aufgabe wird durch einen Wärmetauscher für einen Kältetrockner, insbesondere für einen Druckluftkältetrockner, nach Anspruch 1 sowie einen Kältetrockner, insbesondere Druckluftkältetrockner, nach Anspruch 13 gelöst.

Insbesondere wird die Aufgabe durch einen Wärmetauscher für einen Kältetrockner, vorzugsweise für einen Druckluftkältetrockner, mit mindestens einem ersten Anströmflächenelement, an dem im Betrieb des Wärmetauschers ein zu trocknendes Fluid, insbesondere Druckluft, vorbeiströmen kann und mit mindestens einem zweiten Anströmflächenelement, an dem im Betrieb des Wärmetauschers (bedarfsweise) ein Kältefluid vorbeiströmen kann, gelöst, wobei das erste und zweite Anströmflächenelement mindestens bereichsweise an mindestens einen vorgesehenen Kältespeicherraum zum Befüllen mit einem Kältespeichermedium angekoppelt sind bzw. ankoppelbar sind und wobei das erste und/oder zweite Anströmflächenelement mit mindestens einem sich in den Kältespeicherraum hineinerstreckenden, insbesondere den Kältespeicherraum durchdringenden, Wärmeübertragungselement verbunden ist/sind, wobei der Kältespeicherraum zumindest bereichsweise durch eine erste und/oder zweite, Platte begrenzt ist, wobei das erste und/oder zweite Anströmflächenelement zumindest teilweise durch die erste bzw. zweite Platte gebildet ist/sind oder umgekehrt, dass die erste und/oder zweite Platte zumindest teilweise durch das erste bzw. zweite Anströmflächenelement gebildet ist/sind, und wobei die erste und/oder zweite Platte als ebene Platte ausgebildet ist.

Ein wesentlicher Gedanke der Erfindung besteht darin, dass die sich in den Kältespeicherraum hineinerstreckenden Wärmeübertragungselemente vorgesehen sind. Durch das Vorsehen des Kältespeicherraumes, der mit einem Kältespeichermedium zu befüllen ist, sind nur vergleichsweise geringe Drucktaupunktschwankungen zu erwarten, wobei die Wärmeübertragungselemente zu vergleichsweise kurzen Wärmeleitwegen führen, so dass eine vergleichsweise schnelle Speicherung und Entspeicherung des Kältespeichermediums ermöglicht ist. Der Konstruktionsaufwand ist dabei vergleichsweise gering. In der US 7,134,483 B2 ist ein Stapel aus profilierten Metallplatten vorgeschlagen, bei dem der thermische Kontakt von einer Platte zur nächsten und damit von einem Spalt zum übernächsten vergleichsweise gering ist. Der thermische Kontakt gemäß der vorliegenden Erfindung ist demgegenüber erhöht. Auch ist insbesondere gegenüber der US 7,134,483 B2 eine schnelle Abgabe von Wärme, beispielsweise Erstarrungswärme bei der Verwendung von Latentspeichermaterial, über eine Kältemittelseite und eine darauffolgende schnelle Aufnahme von Wärme, beispielsweise Schmelzwärme bei Verwendung eines Latentspeichermaterials, von einer gegenüberliegenden Luftseite möglich. Insbesondere Latentspeichermaterialien, wie Paraffine, weisen vergleichsweise schlechte Wärmeleitwerte auf, sodass hier der erfindungsgemäße Kältetrockner besonders vorteilhaft ist. Auch die Probleme, die beispielsweise bei der DE 102 11 602 A1 aus der außenseitigen Anbringung des Thermospeichers resultierten, sind durch den hier erfindungsgemäß vorgeschlagenen Kältetrockner reduziert. Insbesondere sind gegenüber der DE 103 11 602 A1 die Übertragungsflächen vergleichsweise hoch und die Wärmeleitwege vergleichsweise kurz, was zu einem insgesamt effizienten Betrieb des Kältetrockners führt.

Unter einer "Ankopplung" kann insbesondere eine unmittelbare Berandung bzw. Kontaktierung des Kältespeicherraums durch das erste bzw. zweite Anströmflächenelement verstanden werden. Es ist jedoch auch denkbar, dass zwischen Anströmflächenelement und Kältespeicherraum noch ein weiteres Wärmeübertragungselement bzw. eine weitere Wärmeübertragungsvorrichtung vorgesehen ist.

Die Übertragung von Wärme vom (bzw. auf das) Kältespeichermedium erfolgt insbesondere über das Wärmeübertragungselement. Es können mehrere Wärmeübertragungselemente beteiligt sein. Ein Wärmeübertrag kann beispielsweise vom Kältespeichermedium zur zu trocknenden Luft über das Wärmeübertragungselement, eine erste Platte, ein Kältemittel-Wärmeübertragungselement, eine zweite Platte und ein Luft-Wärmeübertragungselement erfolgen.

In dem Kältemittel-Wärmeübertragungselement kann das Kältemittel strömen. Das Kältemittel-Wärmeübertragungselement kann wie das Wärmeübertragungselement ausgebildet sein. Gleiches gilt für das Luft-Wärmeübertragungselement. Hier und im Folgenden ist unter "Wärmeübertragungselement" (ohne weitere Zusätze) stets das sich in den Kältespeicherraum hinein erstreckende Wärmeübertragungselement gemeint.

Das Kältemittel-Wärmeübertragungselement und das Luft-Wärmeübertragungselement sind vorzugsweise Bestandteil der entsprechenden Anströmelemente. Das Kältemittel-Wärmeübertragungselement und das Luft-Wärmeübertragungselement verbessern weiter die wärmetechnische Ankopplung.

Der Kältespeicherraum kann vorzugsweise mit einem entsprechenden Kältespeichermedium, insbesondere einem Latentwärmespeichermedium (PCM, "Phase Change Material"), befüllt sein. Eine Wärmeleitfähigkeit des Wärmeübertragungselements ist vorzugsweise mindestens 10 mal, weiter vorzugsweise mindestens 30 mal, noch weiter vorzugsweise mindestens 100 mal so hoch wie eine Wärmeleitfähigkeit des Kältespeichermediums. Die Wärmeleitfähigkeit des Wärmeübertragungselements kann beispielsweise mindestens 50 W/(mK), vorzugsweise mindestens 100 W/(mK), weiter vorzugsweise mindestens 130 W/(mK) betragen. Eine spezifische Wärmekapazität des Kältespeichermediums kann beispielsweise mindestens 1 kJ/(kgK), vorzugsweise mindestens 1,5 kJ/(kgK), noch weiter vorzugsweise mindestens 2 kJ/(kgK) betragen. Eine Phasenumwandlungsenthalpie des Kältespeichermediums kann beispielsweise mindestens 50 kJ/kg, vorzugsweise mindestens 100 kJ/kg, weiter vorzugsweise mindestens 150 kJ/kg betragen. Als Latentwärmespeichermedium können vorzugsweise Wasser und/oder Parafin und/oder ein flüssig kristalliner Latentwärmespeicher und/oder ein Latentwärmespeichermaterial auf Salz- oder Paraffinbasis zum Einsatz kommen. Insgesamt ist insbesondere die Wärmeaufnahmefähigkeit (beim Einsatz eines Latentwärmespeichers im Bereich der Phasenumwandlungstemperatur) des Kältespeichermediums gegenüber dem Wärmeübertragungselement vergleichsweise hoch. Außerdem ist insbesondere die Wärmeleitfähigkeit des Wärmeübertragungselements gegenüber dem Kältespeichermedium vergleichsweise hoch.

Insgesamt können vergleichsweise kurze Speicher- und Entspeicherungszeiten (bzw. "Ladungs-" und "Entladungszeiten") des Kältespeicherraumes als auch eine vergleichsweise hohe Speicherkapazität erreicht werden.

Der Kältespeicherraum ist - wie bereits erwähnt - zumindest bereichsweise durch eine erste und/oder zweite, ebene, Platte begrenzt. Das erste und/oder zweite Anströmflächenelement ist zumindest teilweise durch die erste bzw. zweite, insbesondere ebene, Platte gebildet. Umgekehrt kann die erste und/oder zweite, ebene, Platte zumindest teilweise durch das erste bzw. zweite Anströmflächenelement gebildet sein. Durch derartige Platten kann die Speicherung bzw. Entspeicherung weiter verbessert werden, was die Effizienz des Wärmetauschers erhöht.

Das erste und/oder zweite Anströmflächenelement kann teilweise durch einen Leitungswandungsabschnitt, insbesondere Rohrwandungsabschnitt gebildet sein. Eine Rohrwandung kann vorzugsweise rechteckig, insbesondere quadratisch sein oder einen runden Querschnitt aufweisen. Durch eine derartige Bauform wird der konstruktive Aufwand, insbesondere der Platzbedarf reduziert.

In einer konkreten Ausführungsform ist das Wärmeübertragungselement mit dem ersten und/oder zweiten Anströmflächenelement bzw. der ersten und/oder zweiten, insbesondere ebenen Platte, verlötet. Dadurch wird der Wärmeübertrag und somit die Effizienz des Wärmetauschers verbessert.

Vorzugsweise ist jeder beliebige Punkt innerhalb des Kältespeicherraumes näher zu einem nächsten Wärmeübertragungselement als ein Maximalabstand, wobei der Maximalabstand kleiner ist als ein Plattenabstand zwischen den Platten, wobei ein Verhältnis von Plattenabstand zum Maximalabstand vorzugsweise mindestens 4, weiter vorzugsweise mindestens 6, noch weiter vorzugsweise mindestens 10 beträgt. Der Maximalabstand kann vorzugsweise 0,5 mm bis 2,00 mm, insbesondere etwa 0,75 mm bis 1,25 mm betragen. Der Kältespeicherraum und das mindestens eine Wärmeübertragungselement sind somit vorzugsweise derart ausgebildet, dass kein Punkt innerhalb des Kältespeicherraumes weiter entfernt als ein vorbestimmter Maximalabstand liegt. Dadurch werden vergleichsweise kurze Wärmeleitwege im Kältespeicherraum bzw. innerhalb des Kältespeichermediums erreicht, so dass auch bei einer vergleichsweise geringen Wärmeleitfähigkeit des Kältespeichermediums in kurzer Zeit große Wärmemengen aufgenommen bzw. abgegeben werden können. Dadurch kann bei geringem Platzbedarf eine vergleichsweise hohe Effizienz erreicht werden.

Der Maximalabstand ist der größte Abstand, der für einen Punkt im Kältespeichermedium zum jeweils nächsten Wärmeübertragungselement auftreten kann.

In einer bevorzugten Ausführungsform weist mindestens ein Wärmeübertragungselement mindestens zwei voneinander durch einen Wärmeübertragsabstand beabstandete, insbesondere parallel verlaufende, Abschnitte auf, wobei die Abschnitte vorzugsweise (im Wesentlichen) senkrecht zu mindestens einer der, insbesondere ebenen, Platten verlaufen, wobei der Wärmeübertragsabstand vorzugsweise kleiner ist als ein Plattenabstand der Platten, wobei ein Verhältnis von Plattenabstand zu Wärmeübertragsabstand weiter vorzugsweise mindestens 2, noch weiter vorzugsweise mindestens 3, noch weiter vorzugsweise mindestens 5, noch weiter vorzugsweise mindestens 10 beträgt. Dadurch wird auf konstruktiv einfache Weise die Effizienz des Wärmetauschers verbessert.

Der Plattenabstand kann vorzugsweise mindestens 5 mm, weiter vorzugsweise mindestens 10 mm betragen. Der Wärmeübertragsabstand kann vorzugsweise 1 mm bis 4 mm, insbesondere 1,5 mm bis 2,5 mm betragen.

Vorzugsweise macht eine Verbindungsfläche, insbesondere Lötverbindungsfläche, zwischen dem ersten und/oder zweiten Anströmflächenelement und/oder der ersten und/oder zweiten, insbesondere ebenen, Platte einerseits und dem mindestens einem Wärmeübertragungselement andererseits, mindestens 10 %, vorzugsweise mindestens 20 %, weiter vorzugsweise mindestens 30 %, noch weiter vorzugsweise mindestens 50 % einer in Richtung des Kältespeicherraumes orientierten Oberfläche des ersten/zweiten Anströmflächenelementes bzw. der ersten/zweiten, insbesondere ebenen, Platte aus. Dadurch wird mit der Wärmeübertragung die Effizienz verbessert. Die Verbindung kann beispielsweise auch durch Schweißen oder Kleben erfolgen (im Allgemeinen).

Der Wärmetauscher, insbesondere mindestens ein Anströmflächenelement und/oder mindestens eine (ebene) Platte und/oder mindestens ein Wärmeübertragungselement ist/sind vorzugsweise zumindest teilweise aus Metall, insbesondere Aluminium gefertigt. Auch dadurch kann die Effizienz verbessert werden.

Vorzugsweise ist innerhalb des Wärmtauschers ein Gas-Gas-Bereich derart ausgebildet, dass ein Wärmeaustausch zwischen zu trocknendem Fluid und getrocknetem Fluid durchführbar ist. Dadurch kann die Effizienz des Wärmetauschers gesteigert werden.

Weiter vorzugsweise ist eine Führung für das zu trocknende Gas zumindest teilweise durch mindestens eine, insbesondere mindestens zwei der, insbesondere ebenen, Platten definiert, wobei sich die Führung noch weiter vorzugsweise zumindest teilweise durch den Gas-Gas-Bereich und einen Gas-Kältemittel-Bereich zum Wärmeaustausch zwischen dem zu trocknenden Fluid und dem Kältemittel erstreckt. Dadurch wird der konstruktive Aufwand verringert und insbesondere ein niedriger Druckverlust auf der Seite des zu trocknenden Fluids erreicht.

In einer bevorzugten Ausführungsform ist ein mäanderförmig gebogenes Rohr zum Führen des Kältemittels vorgesehen, wobei das Rohr vorzugsweise zwischen die zwei (ebenen) Platten eingelötet ist und weiter vorzugsweise mindestens ein Kältespeicherraum zwischen jeweils zwei Rohrdurchgängen angeordnet ist. Dadurch wird eine platzsparende Bauweise ermöglicht.

In einer bevorzugten Ausführungsform ist mindestens eine Kältemittelführung als Raum zwischen mindestens zwei (ebenen) Platten ausgeführt, wobei vorzugsweise die Platten mit mindestens einem Wärmeübertragungselement verlötet (allgemein fest verbunden) sind. Dadurch ist der Aufwand in konstruktiver Hinsicht gering.

Vorzugsweise erstreckt sich eine Trennplatte zwischen Kältemittel und Speichermedium zumindest abschnittsweise auch über den Gas-Gas-Bereich. Dadurch werden Bauteiltoleranzen vereinheitlicht und ein dichtes Verlöten ermöglicht.

Vorzugsweise sind mindestens zwei Kältespeicherräume durch mindestens eine, ggf. an einer Außenseite angebrachte, insbesondere angeschweißte, Sammelvorrichtung miteinander fluidtechnisch verbunden. Dadurch wird das Befüllen einfach und insbesondere über nur eine Füllstelle möglich.

Die obige Aufgabe wird weiterhin gelöst durch einen Kältetrockner, insbesondere Druckluftkältetrockner, umfassend einen Wärmetauscher nach der vorbeschriebenen Art. Hinsichtlich der Vorteile wird auf den bereits beschriebenen Wärmetauscher verweisen.

Weitere Ausführungsformen ergeben sich aus den Unteransprüchen.

Nachfolgend wird die Erfindung auch hinsichtlich weiterer Merkmale und Vorteile anhand von Ausführungsbeispielen beschrieben, die anhand der Abbildungen näher erläutert werden.

Hierbei zeigen:
- Fig. 1: ein zwischen zwei Platten angeordnetes Wärmeübertragungselement in schematischer Schnittansicht;
- Fig. 2: eine erste Ausführungsform des erfindungsgemäßen Wärmetauschers in einer schematischen Seitenansicht;
- Fig. 3: die Ausführungsform gemäß Fig. 2 entlang der Schnittlinie III-III aus Fig. 2;
- Fig. 4: eine zweite Ausführungsform des Wärmetauschers in einer schematischen Schnittansicht;
- Fig. 5: einen Ausschnitt der Ausführungsform gemäß Fig. 4 in einer Schrägansicht;
- Fig. 6: einen vergrößerten Ausschnitt aus Fig. 5;
- Fig. 7: eine weitere schematische Schnittansicht des zwischen zwei Platten angeordneten Wärmeübertragungselements;
- Fig. 8: einen Schnitt entlang der Linie VIII-VIII aus Fig. 7;
- Fig. 9: ein Wärmeübertragungselement in Schrägansicht; und
- Fig. 10: eine Vergrößerung des Ausschnittes J aus Fig. 9.

In der folgenden Beschreibung werden für gleiche und gleichwirkende Teile dieselben Bezugsziffern verwendet.

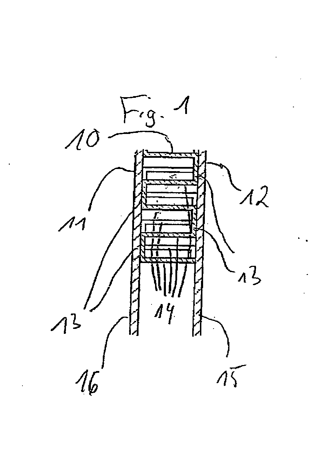

Fig. 1 zeigt ein Wärmeübertragungselement 10, das zwischen eine erste ebene Platte 11 und eine zweite ebene Platte 12 eingelötet ist. Das Wärmeübertragungselement 10 besteht dabei aus einem Blech, das periodisch um jeweils 90 Grad umgebogen ist. Das Blech ist vorzugsweise mit Schlitzen versehen. Biegestellen können abschnittsweise um einen vorbestimmten Betrag versetzt sein. Das Wärmeübertragungselement 10 umfasst Verbindungsabschnitte 13, die vorzugsweise parallel zu den ebenen Platten 11, 12 verlaufen und Transferabschnitte 14, die vorzugsweise senkrecht auf die Verbindungsabschnitte 13 bzw. die ebenen Platten 11, 12 stehen. Das blechartige Wärmeübertragungselement 10 verläuft insgesamt (im Wesentlichen) parallel zu den begrenzenden ebenen Platten 11, 12 (wobei die Teilabschnitte auch senkrecht zu den ebenen Platten verlaufen). Abstände zwischen je zwei etwa parallel verlaufenden Transferabschnitten 14 sind dabei vergleichsweise eng gewählt, so dass sich kurze Wärmeleitwege in einem Kältespeichermedium ergeben, das zwischen die ebenen Platten 11, 12 eingeführt werden kann. Durch den parallelen Verlauf der Transferabschnitte 14 ist ein guter Wärmetransport über die Verbindungsabschnitte 13 zu den ebenen Platten 11, 12 möglich. Diese Art eines Wärmeübertragungselements kann grundsätzlich auch innerhalb eines Gas-Gas-Bereichs bzw. in allen fluiddurchströmten Plattenzwischenräumen vorgesehen sein.

Die Verbindungsabschnitte 13 des Wärmeübertragungselementes 10 sind mit den ebenen Platten 11, 12 verlötet, können aber auch mit diesen verklebt oder auf andere Weise fest verbunden sein.

An einer Außenseite 15 der ersten ebenen Platte 11 kann beispielsweise ein Kältefluid (allgemein Kältemittel) vorbeiströmen. An einer Außenseite 16 der zweiten ebenen Platte 12 kann beispielsweise das zu trocknende Gas vorbeiströmen. Bei einer derartigen Ausgestaltung dient die zweite ebene Platte 12 als ein erstes Anströmflächenelement, an dem im Betrieb des Wärmetauschers ein zu trocknendes Fluid, insbesondere Druckluft, vorbeiströmen kann. Die erste ebene Platte 11 dient bei einer derartigen Ausgestaltung als ein zweites Anströmflächenelement, an dem im Betrieb des Wärmetauschers bedarfsweise das Kältemittel vorbeiströmen kann.

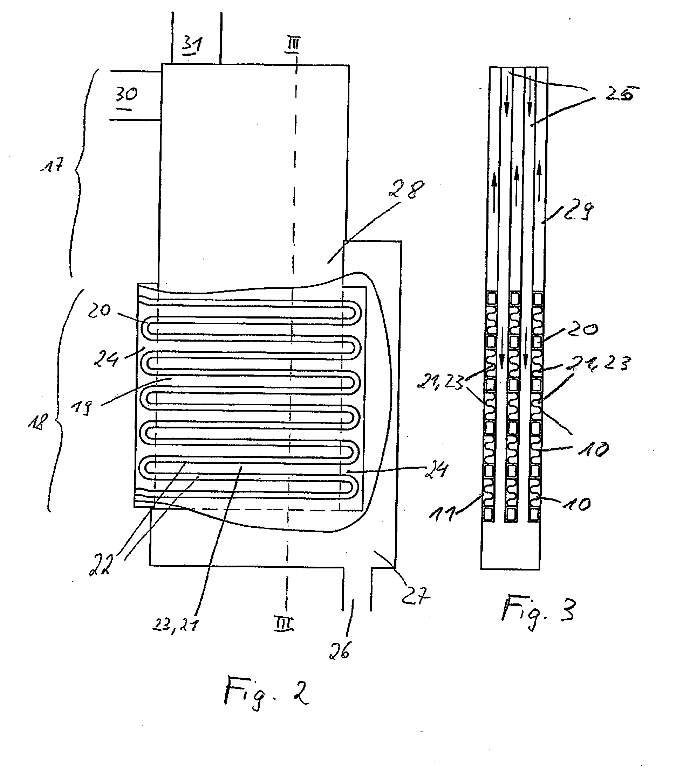

In Fig. 2 ist eine erste Ausführungsform des Wärmetauschers in einer schematischen Seitenansicht zu sehen. Der Wärmetauscher ist in einen ersten (oberen) Bereich, nämlich einen Gas-Gas-Bereich 17 und einen zweiten (unteren) Bereich, nämlich einen Gas-Kältemittel-Bereich 18 unterteilt. Im Gas-Gas-Bereich 17 kann ein Wärmeaustausch zwischen dem zu trocknenden Gas und einem zumindest teilweise getrockneten Gas erfolgen. Im Gas-Kältemittel-Bereich kann ein Wärmeaustausch zwischen dem zu trocknenden Gas und dem Kältemittel über eine Platte zwischen einem Kältemittelrohr 20 und einem ersten Durchgang 25 für das zu trocknende Gas erfolgen. Im Gas-Kältemittel-Bereich 18 befindet sich das mäanderförmig gebogene Kältemittelrohr 20, das einen rechteckförmigen (vorzugsweise quadratischen) Querschnitt aufweist. Alternativ kann das Kältemittelrohr 20 auch einen runden oder noch andersartigen Querschnitt aufweisen. In Zwischenräumen 21 zwischen den sich gegenüberliegend parallel verlaufenden Längsabschnitten 22 des Kältemittelrohres 20 befinden sich Kältespeicherteilräume 23 zur Aufnahme eines Kältespeichermediums. Die Kältespeicherteilräume 23 sind über eine Sammelvorrichtung 24 (Sammelkasten) an einer Außenseite des Wärmetauschers miteinander verbunden und bilden den Kältespeicherraum 19 aus. In den Kältespeicherteilräumen 23 sind jeweils Wärmeübertragungselemente 10, die ein vergleichsweise schnelles Speichern bzw. Entspeichern der Kältespeicherteilräume 23 ermöglichen, vorgesehen.

Vorzugsweise erstreckt sich die Sammelvorrichtung 24 über zwei sich gegenüberliegende Außenseiten des Wärmetauschers. Alternativ können zwei komplementär zu einander ausgebildete Sammelvorrichtungen 24 an den Außenseiten vorgesehen sein.

Im Betrieb strömt das zu trocknende Gas zunächst durch die ersten Durchgänge 25 durch den Gas-Gas-Bereich 17 und dann durch den Gas-Kältemittel-Bereich 18. Im Gas-Kältemittel-Bereich 18 strömt das zu trocknende Gas sowohl an dem mäanderförmigen Kältemittelrohr 20 als auch an den Kältespeicherteilräumen 23 vorbei. Nach einem Durchströmen des Gas-Kältemittel-Bereichs 18 strömt das zu trocknende Gas durch einen Umlenkbereich 26, in dem ein ausfallendes Kondensat abgeschieden und durch einen Kondensatablass 27 abgeführt werden kann. Vom Umlenkbereich 26 strömt das zu trocknende Gas weiter über einen Eingang 28 durch zweite Durchgänge 29 im Gas-Gas-Bereich 17 (im Gegenstrom zum einströmenden Gas) bis zu einem Ausgang 30. Das zu trocknende Gas kann über eine Zuführung 31 zugeführt werden.

Insgesamt ist der Wärmetauscher gemäß Fig. 2 und 3 sandwichartig aufgebaut, wobei in einer ersten, dritten und fünften Schicht zwischen jeweils zwei Platten im Gas-Gas-Bereich 17 einer der zweiten Durchgänge 29 verläuft und im Gas-Kältemittel-Bereich 18 jeweils eines der mäanderförmigen Kältemittelrohre 20 mit zwischen den Längsabschnitten 22 des Kältemittelrohres 20 angeordneten Kältespeicherteilräumen 23 vorgesehen ist. In einer zweiten und vierten Schicht verläuft jeweils einer der ersten Durchgänge 25 für das einströmende zu trocknende Gas. Die Anordnung kann grundsätzlich auch anders ausgebildet sein, beispielsweise können mindestens drei Schichten erster Durchgänge und mindestens zwei Schichten zweiter Durchgänge vorgesehen sein. Im Allgemeinen ist eine alternierende Anordnung von ersten und zweiten Durchgängen bevorzugt.

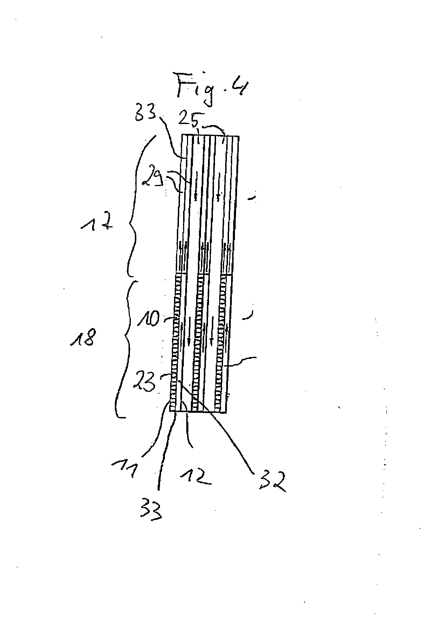

Fig. 4 zeigt eine zweite Ausführungsform des Wärmetauschers in einer schematischen Schnittansicht. Der Wärmetauscher gemäß Fig. 4 ist ebenfalls in einen Gas-Gas-Bereich 17 und einen Gas-Kältemittel-Bereich 18 unterteilt. Über eine nicht dargestellte Zuführung strömt das Gas im Betrieb zunächst durch erste Durchgänge 25 durch den Gas-Gas-Bereich 17 und anschließend den Gas-Kältemittel-Bereich 18.

Im Gas-Kältemittel-Bereich 18 sind zwischen je zwei ebenen Platten 11, 12 Kältemittelleitungen 32 und Kältespeicherteilräume 23 für ein Kältespeichermedium vorgesehen. Die Kältespeicherteilräume 23 sind von den Kältemittelleitungen 32 durch (ebene) Trennplatten 33 getrennt. Die ebenen Platten 11, 12 sowie die Trennplatte 33 verlaufen (im Wesentlichen) parallel zu den ersten Durchgängen 25. In den Kältespeicherteilräumen 23 sind Wärmeübertragungselemente 10 vorgesehen. Weitere Wärmeübertragungselemente können sich auch in den ersten Durchgängen 25 und/oder den Kältemittelleitungen 32 und/oder den zweiten Durchgängen 29 befinden. Form und Dimension der jeweiligen Wärmeübertragungselemente kann sich voneinander unterscheiden. Die Trennplatte 33 verläuft sowohl durch den Gas-Kältemittel-Bereich 18 als auch den Gas-Gas-Bereich 17. Daraus resultieren im Gas-Gas-Bereich 17 jeweils zwei benachbarte parallel zueinander verlaufende zweite Durchgänge 29 für das ausströmende, teilweise getrocknete Gas. Analog den Fig. 2 und 3 kann (in Fig. 4 nicht zu sehen) ein Umlenk- und Abscheideraum mit Kondensatablass vorgesehen sein.

Auch der Wärmetauscher gemäß Fig. 4 ist fünfschichtig aufgebaut, wobei in einer zweiten und vierten Schicht jeweils erste Durchgänge 25 verlaufen. In einer ersten, dritten und fünften Schicht verlaufen innerhalb des Gas-Gas-Bereichs 17 jeweils zwei zweite Durchgänge 29 und im Gas-Kältemittel-Bereich 18 jeweils ein Kältespeicherteilraum 23 sowie eine Kältemittelleitung 32. Es können auch (dies gilt auch für die Ausführungsformen gemäß Fig. 2 und 3) mehr als fünf Schichten oder weniger, beispielsweise nur drei Schichten analog den in den Figuren gezeigten Aufbau vorgesehen sein.

Als Speichermedium können verschiedenartige Medien eingesetzt werden. Vorzugsweise liegt eine Phasenumwandlungstemperatur beim Einsatz von Latentwärmespeichermedien in einem vorbestimmten Betriebsbereich des Wärmetauschers. Als Speichermedien können beispielsweise Materialien wie Paraffine, Karbonsäuren, Fettalkohole, Ester, Amine und/oder halogenierte Kohlenwasserstoffe, sowie Mischungen aus solchen Stoffen oder auch anorganische Materialien wie Salzhydraten zum Einsatz kommen. Für die Trocknung von Druckluft besonders geeignet sind Materialien, deren Umwandlungsbereich (im Wesentlichen) etwas oberhalb des Gefrierpunktes von Wasser liegt, also beispielsweise zwischen 0° und 5° Celsius, vorzugsweise im Bereich von 1,5° bis 2,5° Celsius.

Durch die in Fig. 1 erkennbare versetzte Anordnung der Biegestellen wird auf konstruktiv einfache Weise die Einfüllung eines Speichermediums erleichtert bzw. bei einer Durchströmung durch das zu trocknende Gas oder durch das Kältemittel der Wärmeübergang verbessert.

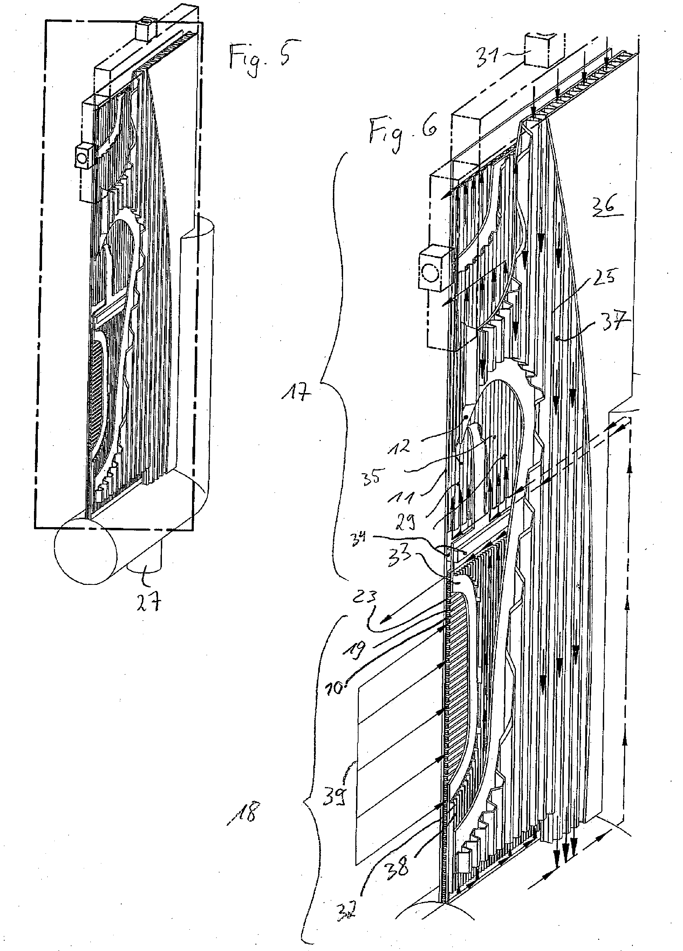

Fig. 5 zeigt einen Ausschnitt der Ausführungsform gemäß Fig. 4 in einer Schrägansicht. Die Ausgestaltung gemäß Fig. 5 und 6 kann jedoch auch als vollständiger Wärmetauscher betrachtet werden. Analog Fig. 4 sind zwischen der ersten und der zweiten ebenen Platten 11, 12 in dem Gas-Gas-Bereich 17 zwei zweite Durchgänge 29 vorgesehen, die durch die Trennplatte 33 voneinander getrennt sind. Die zweiten Durchgänge 29 sind gegenüber dem Gas-Kältemittel-Bereich 18 durch je eine Trennleiste 34 abgetrennt bzw. abgedichtet. In den zweiten Durchgängen 29 sind periodisch gebogene Bleche 35 angeordnet, an denen das teilweise getrocknete Fluid entlang strömen kann. Die Bleche 35 sind derart gebogen, dass im Querschnitt etwa trapezförmige Ausnehmungen ausgebildet sind.

Zwischen der ebenen Platte 12 und einer ebenen Platte 36 befindet sich der erste Durchgang 25, in dem das zu trocknende Fluid durchgeführt wird. Im ersten Durchgang 25 befindet sich ebenfalls ein periodisch gebogenes Blech, das mit dem Bezugszeichen 37 gekennzeichnet ist. Das Blech 37 weist periodisch sich wiederholende Ausnehmungen auf, die im Querschnitt in etwa trapezförmig ausgebildet sind.

Zwischen der Trennplatte 33 und der zweiten ebenen Platte 12 im Gas-Kältemittel-Bereich 18 befindet sich die Kältemittelleitung 32, die eine Rippenplatte 38 umfasst. Die Rippenplatte 38 weist sich periodisch wiederholende Rippen auf, so dass eine Mehrzahl von einzelnen Fluidkanälen für das Kältemittel ausgebildet ist. Analog wird auch durch das Blech 35 und das Blech 37 eine Mehrzahl von Fluidkanälen ausgebildet. Die Fluidkanäle der Bleche 35, des Bleches 37 und der Rippenplatte 38 verlaufen in den Fig. 5 und 6 von oben nach unten bzw. unabhängig von der Orientierung von der Zuführung 31 zu dem Kondensatablass 27. Im Gas-Kältemittel-Bereich 18 sind zwischen der ersten ebenen Platte 11 und der Trennplatte 33 ein Kältespeicherraum 19 bzw. mehrere Kältespeicherteilräume 23 vorgesehen. Der Kältespeicherraum 19 umfasst ein Wärmeübertragungselement 10, das als periodisch gebogenes Blech ausgebildet ist. Im Kältespeicherraum 19 bzw. den Ausnehmungen des blechartigen Wärmeübertragungselements 10 ist ein Kältespeichermedium eingebracht. Das Kältespeichermedium (dies gilt auch für die anderen Ausführungsformen) ist vorzugsweise stationär innerhalb des Kältespeicherraumes 19 vorgesehen und kann weiter vorzugsweise über eine Befüllvorrichtung 39, die vorzugsweise dem Sammelvorrichtung 24 entspricht, eingebracht werden. In dem Wärmeübertragungselement 10 sind mehrere Fluidkanäle vorgesehen, die waagrecht oder senkrecht zu den Fluidkanälen des Blechen 37 und der Rippenplatte 38 verlaufen. Dadurch wird auf einfache Weise die Wärmeübertragung verbessert, was die Effizienz verbessert.

Der Wärmetauscher kann vorzugsweise nach dem Anordnen mehrerer, insbesondere aller Komponenten (Platten, Wärmeübertragungselemente, Leisten und/oder gegebenenfalls Rohrleitungen) in einem Durchlaufofen mit Schutzgasatmosphäre oder in einem Vakuumofen oder auch in einem Flussmittelbad verlötet werden. Die Wärmeübertragungselemente können beispielsweise in so genannten Aluminiumblockwärmetauschern eingesetzt werden, um vergleichsweise hohe Wärmeübertragungsleistungen bei einer Durchströmung zu erreichen. Insbesondere sind die Wärmeübertragungselemente für die Verwendung mit einem stationären Speichermedium geeignet. Die Wärmeübertragungselemente können beispielsweise gefalzte dünne Bleche sein, die gegebenenfalls Schlitze, Löcher und/oder sonstige Aussparungen enthalten.

Die Faltungen können insbesondere bei geschlitzten Blechen auch abschnittsweise versetzt ausgeführt sein.

Die Wärmeübertragungselemente können alternativ auch als Strangpress- oder Stranggussprofile ausgebildet sein. Bei dem vorgeschlagenen Wärmetauscher (Speicherwärmetauscher) ist vorzugsweise einerseits eine vergleichsweise große Fläche in Lötverbindung mit den begrenzenden Platten und andererseits eine große Kontaktfläche mit dem Speichermedium mit insbesondere engen Abständen von Wärmeleitabschnitten bereitgestellt. Vorzugsweise ist die Struktur durchgehend mit einem Speichermedium befüllbar.

Dadurch werden sowohl kurze Speicherzeiten (Entspeicherzeiten) als auch eine vergleichsweise hohe Speicherkapazität erreicht. Die kurzen Wärmeleitwege im Speichermedium (Latentspeichermedium) werden durch eine entsprechende Gestaltung des Wärmeübertragungselementes ermöglicht. Dadurch können trotz der üblicherweise vergleichsweise geringen Wärmeleitfähigkeit des Speichermediums in kurzer Zeit große Wärmemengen aufgenommen bzw. abgegeben werden.

Die Wärmeübertragungselemente weisen vorzugsweise enge (beispielsweise 1,5 mm bis 2,5 mm breite) Ausnehmungen auf, die weiter vorzugsweise (im Wesentlichen) senkrecht oder in einem Winkel von>60 Grad zu den ebenen Platten verlaufen, so dass von einem beliebigen Punkt innerhalb des Speichermediums ein vergleichsweise kurzer Wärmeleitungsweg bis zum Wärmeübertragungselement - zumindest parallel zu den Platten - realisiert ist. Aufgrund der vergleichsweise hohen Wärmeleitfähigkeit der Wärmeübertragungselemente können die Abstände der Trennplatten deutlich größer als die Breite der Ausnehmungen der Wärmeübertragungselemente ausgeführt werden (beispielsweise 8 mm bis 12 mm, insbesondere 10 mm), so dass ein vergleichsweise großes Volumen für das Speichermedium erreicht wird. Durch eine Fertigung der Wärmeübertragungselemente aus einem Material mit hoher Wärmeleitfähigkeit, wie beispielsweise Aluminium und/oder flächigem Verlöten der Wärmeübertragungselemente mit den ebenen Platten kann ein schneller Wärmetransport bei geringen Temperaturdifferenzen sowohl vom Kältemittel zum Speichermedium als auch vom Speichermedium zum zu trocknenden Gas erreicht werden.

Bei der Ausführungsform gemäß Fig. 2 wird eine vergleichsweise gute Wärmeleitverbindung vom Kältespeichermedium zur jeweiligen Platte und damit sowohl zu den ersten Durchgängen 25 auf einer gegenüberliegenden Plattenseite, als auch zu dem Kältemittelrohr 20 erreicht. Das Kältemittelrohr 20 ist vorzugsweise mit mindestens einer der Platten verlötet. Insgesamt wird eine kompakte, leichte, kostengünstige Wärmetauscherbauform mit wenig Verrohrungsaufwand bereitgestellt, wobei gleichzeitig ein energieeffizienter Betrieb des Kältetrockners mit einer (einfachen) Ein-Aus-Steuerung bei gleichzeitig geringem Drucktaupunktschwankungen ermöglicht ist. Insbesondere mit Latentspeichermaterialien kann eine hohe Speicherdichte erreicht werden, was mit der vorgeschlagenen hohen Übertragungsfläche schon bei einem vergleichsweise kleinen Speichervolumen eine ausreichende Speicherkapazität zur Folge hat. Wird das Kältespeichermedium in die Zwischenräume zwischen das mäanderförmige Kältemittelrohr 20 eingefügt, so ist der Mehraufwand für die Integration des Kältespeichermediums vergleichsweise gering, so dass im Vergleich zu Speicher-Kältetrocknern gemäß dem Stand der Technik ein deutlich kleinerer, leichterer und kostengünstiger Kältetrockner bei gleicher Funktion ermöglicht wird.

Der Wärmetauscher wird bevorzugt als kombinierter Wärmetauscher mit Gas-Gas-Bereich und Gas-Kältemittel-Bereich (Gas-Kältemittel-Speicher-Bereich) ausgeführt, weiter vorzugsweise mit einem durch beide Wärmetauscher-Bereiche durchgehenden Durchgang des eintretenden Gases. Es ist aber alternativ auch möglich, einen Speicherbereich in einen separaten Gas-Kältemittel-Wärmetauscher (Gas-Kältemittel-Speicher-Wärmetauscher) zu realisieren.

Bei der Ausführungsform gemäß Fig. 4 bis 6 erstreckt sich die Trennplatte zwischen Kältespeichermedium und Kältemittel über die gesamte Höhe (Längserstreckung) des Wärmetauschers, so dass die Durchgänge für das austretende, zumindest teilweise getrocknete, Gas in jeweils zwei benachbarte Paralleldurchgänge unterteilt sind. Durch diese Ausführung können auf konstruktiv einfache Weise niedrige Toleranzen, die für ein dichtes Verlöten notwendig sind, realisiert werden. Dadurch kann ein vergleichsweise kompakter, kombinierter Wärmetauscher realisiert werden.

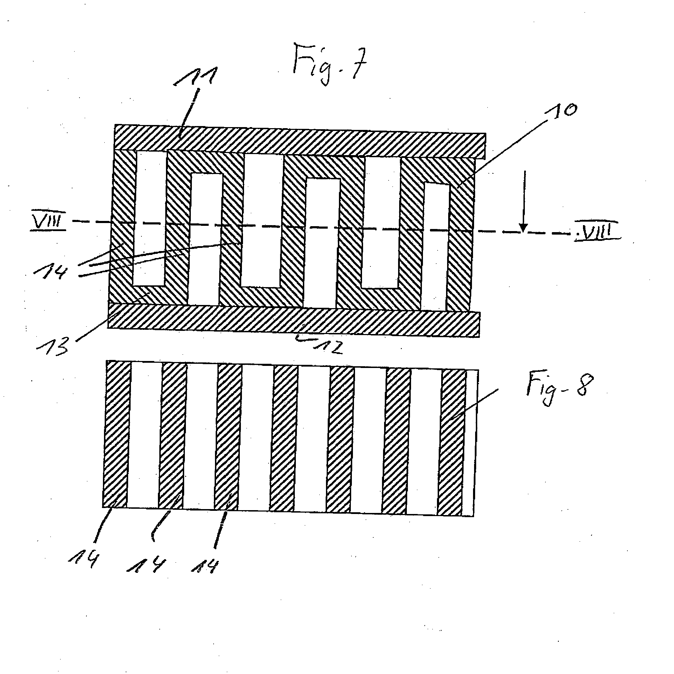

Fig. 7 zeigt eine weitere schematische Schnittansicht des zwischen zwei Platten angeordneten Wärmeübertragungselementes. Eine Summe der Querschnittsflächen der Transferabschnitte 14 beträgt vorzugsweise mindestens 5 %, weiter vorzugsweise mindestens 10 %, noch weiter vorzugsweise (etwa) 15 % einer Plattenfläche (was durch Fig. 8 weiter erläutert ist).

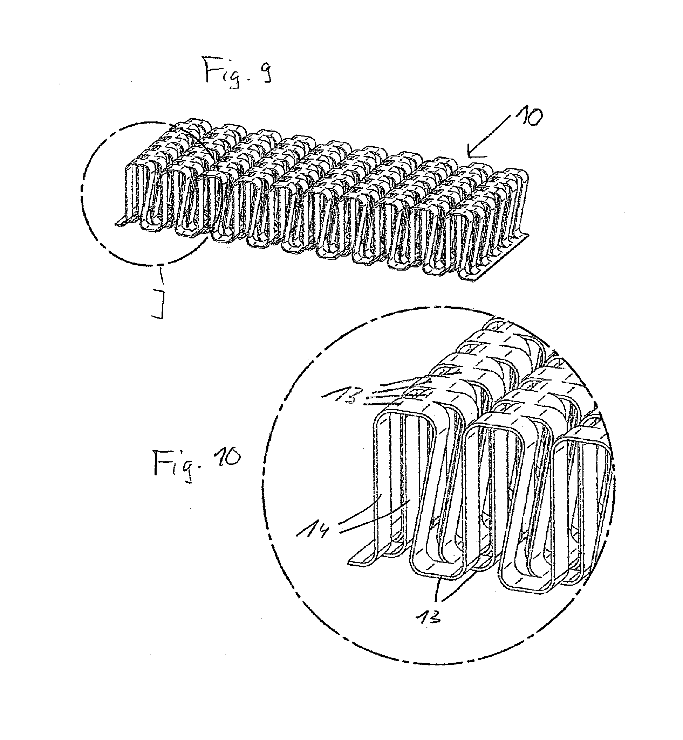

Fig. 9 zeigt das Wärmeübertragungselement 10 in einer Schrägansicht. Das Wärmeübertragungselement 10 ist einstückig aus einem Blech durch Ausbildung von Schlitzen und Umbiegen des Bleches gefertigt. Das Wärmeübertragungselement 10 umfasst mehrere Wärmeübertragungselementreihen 40, die jeweils einem periodisch umgebogenen Blechstreifen entsprechen. Zwei zueinander benachbarte Wärmeübertragungselementreihen 40 sind jeweils gleich ausgebildet, jedoch in einer Richtung parallel zur Vorzugsrichtung der Wärmeübertragungselementreihen um einen vorbestimmten Betrag versetzt. Der vorbestimmte Betrag kann beispielsweise (etwa) eine viertel Periode der periodischen Umbiegungen betragen. Insgesamt wird dadurch ein Wärmeübertragungselement 10 geschaffen, das einerseits vergleichsweise stabil ist und andererseits eine vergleichsweise einfache Befüllung mit einem Kältespeichermedium ermöglicht.

Als Materialien für die Wärmeübertragungselemente und/oder Platten und/oder Kältemittel können insbesondere Aluminium oder Aluminiumlegierungen zum Einsatz kommen, beispielsweise AlMg₃. Die Materialien weisen vorzugsweise eine Wärmeleitfähigkeit von mehr als 100 W/(m²K), weiter vorzugsweise mehr als 130 W/(m²K) auf, und liegen damit deutlich über den Wärmeleitfähigkeiten gewöhnlicher Latentspeichermaterialien, bei denen der Wärmeleitwert unterhalb von zumindest 2 W/(m²K) oder sogar 1 W/(m²K) liegt.

Bei der Ausführungsform gemäß den Fig. 4 bis 8 mit zueinander parallelen Kanälen für das Kältemittel, das Kältespeichermedium (PCM) und das zu trocknende Gas, gibt es an jeder Seite des entsprechenden Kanals eine Wand, die eine Trennwand zu einem jeweils anderen Kanal sein kann. Bei Randkanälen gibt es keine gemeinsame Trennwand zu einem anderen Kanal. Durch die hohe Wärmeleitfähigkeit der Wärmeübertragungselemente 10 kann trotzdem ein hoher Wärmetransport auch zwischen nicht benachbarten Kanälen erfolgen. Der gute Wärmetransport wird zusätzlich auch durch die vergleichsweise große Querschnittsfläche gemäß Fig. 8 erreicht.

Um eine große Wärmemenge in kurzer Zeit dem Kältespeichermedium (Latentspeichermaterial) bei geringen Temperaturunterschieden zuzuführen bzw. aus dem Medium wieder abzuführen und das Speichervolumen dabei möglichst effizient zu nutzen, ist vorzugsweise eine vergleichsweise große spezifische Oberfläche der Wärmeübertragungselemente 10 bezogen auf das Speichervolumen des Kältespeicherraumes 19 vorgesehen, wobei die spezifische Oberfläche weiter vorzugsweise mindestens 500 m²/m³, noch weiter vorzugsweise mindestens 1000 m²/m³, noch weiter vorzugsweise (etwa) 1200 m²/m³ beträgt.

An dieser Stelle sei darauf hingewiesen, dass alle oben beschriebenen Teile für sich alleine gesehen und in jeder Kombination, insbesondere die in den Zeichnungen dargestellten Details, als erfindungswesentlich beansprucht werden. Änderungen hiervon sind dem Fachmann geläufig.

### Bezugszeichenliste

- 10: Wärmeübertragungselement
- 11: erste ebene Platte
- 12: zweite ebene Platte
- 13: Verbindungsabschnitt
- 14: Transferabschnitt
- 15: Außenseite der ersten ebenen Platte
- 16: Außenseite der zweiten ebenen Platte
- 17: Gas-Gas-Bereich
- 18: Gas-Kältemittel-Bereich
- 19: Kältespeicherraum
- 20: Kältemittelrohr
- 21: Zwischenraum
- 22: Längsabschnitt
- 23: Kältespeicherteilraum
- 24: Sammelvorrichtung
- 25: erster Durchgang
- 26: Umlenkbereich
- 27: Kondensatablass
- 28: Eingang
- 29: zweiter Durchgang
- 30: Ausgang
- 31: Zuführung
- 32: Kältemittelleitung
- 33: Trennplatte
- 34: Trennleiste
- 35: Blech
- 36: ebene Platte
- 37: Blech
- 38: Rippenplatte
- 39: Befüllvorrichtung
- 40: Wärmeübertragungselementreihe

## Patentansprüche

1. Wärmetauscher für einen Kältetrockner, insbesondere für einen Druckluftkältetrockner, mit mindestens einem ersten Anströmflächenelement, an dem im Betrieb des Wärmetauschers ein zu trocknendes Fluid, insbesondere Druckluft, vorbeiströmen kann, und mit mindestens einem zweiten Anströmflächenelement, an dem im Betrieb des Wärmetauschers bedarfsweise ein Kältefluid vorbeiströmen kann,
wobei das erste und zweite Anströmflächenelement mindestens bereichsweise an mindestens einen vorgesehenen Kältespeicherraum (19) der mit einem Kältespeichermedium befüllt ist, angekoppelt sind, und
wobei das erste und/oder zweite Anströmflächenelement mit mindestens einem sich in den Kältespeicherraum (19) hinein erstreckenden, insbesondere den Kältespeicherraum (19) durchdringenden, Wärmeübertragungselement (10) verbunden ist/sind, wobei
der Kältespeicherraum (19) zumindest bereichsweise durch eine erste (11) und/oder zweite, Platte (12) begrenzt ist, wobei
das erste und/oder zweite Anströmflächenelement zumindest teilweise durch die erste bzw. zweite Platte (11, 12) gebildet ist/sind oder umgekehrt, dass die erste und/oder zweite Platte (11, 12) zumindest teilweise durch das erste bzw. zweite Anströmflächenelement gebildet ist/sind, und wobei die erste (11) und/oder zweite Platte (12) als ebene Platte ausgebildet ist.

2. Wärmetauscher nach Anspruch 1,
**dadurch gekennzeichnet, dass**
das erste und/oder zweite Anströmflächenelement teilweise durch einen Leitungswandungsabschnitt, insbesondere Rohrwandungsabschnitt, gebildet ist/sind.

3. Wärmetauscher nach Anspruch 1 oder 2,
**dadurch gekennzeichnet, dass**
das Wärmeübertragungselement (10) mit dem ersten und/oder zweiten Anströmflächenelement bzw. der ersten und/oder zweiten Platte (11, 12) verlötet ist.

4. Wärmetauscher nach einem der Ansprüche 1 bis 3,
**dadurch gekennzeichnet, dass**
jeder beliebige Punkt innerhalb des Kältespeicherraumes (19) näher zu einem nächsten Wärmeübertragungselement (10) liegt als ein Maximalabstand, wobei der Maximalabstand kleiner ist als ein mittlerer Plattenabstand zwischen den Platten,
wobei ein Verhältnis von Plattenabstand zu Maximalabstand vorzugsweise mindestens vier, weiter vorzugsweise mindestens sechs, noch weiter vorzugsweise mindestens zehn beträgt.

5. Wärmetauscher nach einem der vorhergehenden Ansprüche,
**dadurch gekennzeichnet, dass**
mindestens ein Wärmeübertragungselement (10) mindestens zwei voneinander durch einen Wärmeübertragsabstand beabstandete, insbesondere parallel zueinander verlaufende, Abschnitte aufweist, wobei die Abschnitte vorzugsweise im Wesentlichen senkrecht zu mindestens einer der Platten (11, 12) verlaufen, wobei der Wärmeübertragsabstand weiter vorzugsweise kleiner ist als ein Plattenabstand der Platten (11, 12), wobei ein Verhältnis von Plattenabstand zu Wärmeübertragsabstand weiter vorzugsweise mindestens zwei, noch weiter vorzugsweise mindestens drei, noch weiter vorzugsweise mindestens fünf beträgt.

6. Wärmetauscher nach einem der vorhergehenden Ansprüche,
**dadurch gekennzeichnet, dass**
eine Verbindungsfläche, insbesondere Lötverbindungsfläche, zwischen dem ersten und/oder zweiten Anströmflächenelement und/oder der ersten und/oder zweiten Platte (11, 12) einerseits und dem mindestens einen Wärmeübertragungselement (10) andererseits, mindestens 10 %, vorzugsweise mindestens 20 %, weiter vorzugsweise mindestens 30 %, noch weiter vorzugsweise mindestens 50 % einer in Richtung des Kältespeicherraumes (19) orientierten Oberfläche des ersten/zweiten Anströmflächenelementes bzw. der ersten/zweiten (ebenen) Platte ausmacht.

7. Wärmetauscher nach einem der vorhergehenden Ansprüche,
**dadurch gekennzeichnet, dass**
ein Gas-Gas-Bereich (17) derart ausgebildet ist, dass ein Wärmeaustausch zwischen zu trocknendem Fluid und zumindest teilweise getrocknetem Fluid durchführbar ist.

8. Wärmetauscher nach Anspruch 7,
**dadurch gekennzeichnet, dass**
eine Führung für das zu trocknende Gas zumindest teilweise durch mindestens eine, insbesondere mindestens zwei Platten (11, 12) definiert ist, wobei sich die Führung vorzugsweise zumindest teilweise durch den Gas-Gas-Bereich (17) und einen Gas-Kältemittel-Bereich (18) zum Wärmeaustausch zwischen dem zu trocknenden Fluid und dem Kältemittel erstreckt.

9. Wärmetauscher nach einem der vorhergehenden Ansprüche,
**dadurch gekennzeichnet, dass**
ein mäanderförmig gebogenes Kältemittelrohr (20) zum Führen des Kältemittels vorgesehen ist, wobei das Kältemittelrohr (20) vorzugsweise zwischen die zwei Platten (11, 12) eingelötet ist und weiter vorzugsweise mindestens ein Kältespeicherraum (19) bzw. Kältespeicherteilraum (23) zwischen jeweils zwei Rohrdurchgängen angeordnet ist.

10. Wärmetauscher nach einem der vorhergehenden Ansprüche,
**dadurch gekennzeichnet, dass**
mindestens eine Kältemittelführung als Raum zwischen mindestens zwei Platten (11, 12) ausgeführt ist, wobei die Platten (11, 12) vorzugsweise mit mindestens einem Wärmeübertragungselement (10) verlötet sind.

11. Wärmetauscher nach einem der vorhergehenden Ansprüche, insbesondere nach Anspruch 10,
**dadurch gekennzeichnet, dass**
sich eine Trennplatte (33) zwischen Kältemittel und Speichermedium zumindest abschnittsweise auch über den Gas-Gas-Bereich (17) erstreckt.

12. Wärmetauscher nach einem der vorhergehenden Ansprüche,
**dadurch gekennzeichnet, dass**
mindestens zwei Kältespeicherräume (19, 23) durch mindestens eine, ggf. an einer Außenseite angebrachte, insbesondere angeschweißte, Sammelvorrichtung (24) miteinander fluidtechnisch verbunden sind.

13. Kältetrockner, insbesondere Druckluftkältetrockner, umfassend einen Wärmetauscher nach einem der vorhergehenden Ansprüche.

## Claims

1. A heat exchanger for a refrigerant dryer such as a compressed air refrigerant dryer, comprising at least one first inflow surface element, past which a fluid to be dried such as compressed air can flow during operation of the heat exchanger, and comprising at least one second inflow surface element, past which a refrigerant fluid can flow as required during operation of the heat exchanger,
wherein the first and second inflow surface elements are coupled at least in some areas to at least one dedicated cold store chamber (19) which is filled with a cold accumulator medium, and
wherein the first and/or second inflow surface element(s) is (are) connected to at least one heat transfer element (10) which extends into the cold store chamber (19), e.g. penetrates the cold store chamber (19), wherein
the cold store chamber (18) is delimited at least in some areas by a first (11) and/or second plate (12), wherein
the first and/or second inflow surface element(s) is/are formed at least partially by the first respectively second plate (11, 12) or vice versa, that the first and/or second plate(s) (11, 12) is/are formed at least partially by the first respectively second inflow surface element, and wherein the first (11) and/or second plate (12) is configured as a flat plate.

2. The heat exchanger according to claim 1,
**characterized in that**
the first and/or second inflow surface element(s) is/are formed partially by a duct wall section, e.g. a tube wall section.

3. The heat exchanger according to claim 1 or 2,
**characterized in that**
the heat transfer element (10) is soldered to the first and/or second inflow surface element(s), respectively the first and/or second plate(s) (11, 12).

4. The heat exchanger according to any one of claims 1 to 3,
**characterized in that**
any arbitrary point within the cold store chamber (19) is closer to a next heat transfer element (10) than a maximum distance, wherein the maximum distance is smaller than a mean plate distance between the plates,
wherein a ratio of plate distance to maximum distance preferably is at least four, further preferentially at least six, still further preferentially at least ten.

5. The heat exchanger according to any one of the preceding claims,
**characterized in that**
at least one heat transfer element (10) exhibits at least two sections, e.g. extending in parallel, spaced from each other by a heat transfer distance, wherein the sections extend preferably essentially perpendicular to at least one of the plates (11, 12), wherein the heat transfer distance is further preferentially smaller than a plate distance of the plates (11, 12), wherein a ratio of plate distance to the heat transfer distance further preferentially is at least two, stiff further preferentially at least three, still further preferentially at least five.

6. The heat exchanger according to any one of the preceding claims,
**characterized in that**
a connecting surface, e.g. a solder connection surface between the first and/or second inflow surface element(s) and/or the first and/or second plate(s) (11, 12) on the one hand, and the at least one heat transfer element (10) on the other, constitutes least 10%, preferably at least 20%, further preferentially at least 30%, still further preferentially at least 50% of a surface oriented in the direction of the cold store chamber (19) of the first/second inflow surface element, respectively the first/second (flat) plate.

7. The heat exchanger according to any one of the preceding claims,
**characterized in that**
a gas-gas area (17) is configured such that a heat exchange can occur between fluid to be dried and an at least partially dried fluid.

8. The heat exchanger according to claim 7,
**characterized in that**
a guiding means for the gas to be dried is at least partially defined by at least one plate, e.g. at least two plates (11, 12), wherein the guiding means extends preferably at least partially through the gas-gas area (17) and a gas-refrigerant agent area (18) for exchanging heat between the fluid to be dried and the refrigerant agent.

9. The heat exchanger according to any one of the preceding claims,
**characterized in that**
a refrigerant agent tube (20) bent in a meander shape is provided for guiding the refrigerant agent, wherein the refrigerant agent tube (20) Is preferably soldered between the two plates (11, 12), and at least one cold store chamber (19), respectively cold store subspace (23), is further preferentially provided between each of two tube passages.

10. The heat exchanger according to any one of the preceding claims,
**characterized in that**
at least one refrigerant agent guiding means is realized as a space between at least two plates (11, 12), wherein the plates (11, 12) are preferably soldered to at least one heat transfer element (10).

11. The heat exchanger according to any one of the preceding claims, in particular according to claim 10,
**characterized in that**
a separating plate (33) extends between the refrigerant agent and the accumulator medium at least in some sections also across the gas-gas area (17).

12. The heat exchanger according to any one of the preceding claims,
**characterized in that**
at least two cold store chambers (19, 23) are fluidically interconnected by at least one, e.g. welded collecting device (24) which is mounted to an external side as need be.

13. Refrigerant dryer such as a compressed air refrigerant dryer, comprising a heat exchanger according to any one of the preceding claims.

## Revendications

1. Échangeur de chaleur pour un dispositif de séchage à froid, en particulier pour un dispositif de séchage à froid à air comprimé, comprenant au moins un premier élément de surface d'afflux le long duquel un fluide à sécher, en particulier de l'air comprimé, peut s'écouler pendant le fonctionnement de l'échangeur de chaleur, et comprenant au moins un deuxième élément de surface d'afflux le long duquel un fluide réfrigérant peut s'écouler selon les besoins pendant le fonctionnement de l'échangeur de chaleur,
sachant que le premier et le deuxième élément de surface d'afflux sont raccordés au moins par zones à au moins un espace accumulateur de froid (19) prévu qui est rempli d'un fluide accumulateur de froid, et
sachant que le premier et/ou le deuxième élément de surface d'afflux est/sont relié/s à au moins un élément de transfert de chaleur (10) s'étendant à l'intérieur de l'espace accumulateur de froid (19), en particulier traversant l'espace accumulateur de froid (19), sachant que
l'espace accumulateur de froid (19) est limité au moins par zones par une première (11) et/ou une deuxième plaque (12), sachant que
le premier et/ou le deuxième élément de surface d'afflux est/sont formé/s au moins en partie par la première ou la deuxième plaque (11, 12) ou inversement en ce que la première et/ou la deuxième plaque (11, 12) est/sont formée/s au moins en partie par le premier ou le deuxième élément de surface d'afflux, et sachant que la première (11) et/ou la deuxième plaque (12) est formée comme plaque plane.

2. Échangeur de chaleur selon la revendication 1,
**caractérisé en ce que**
le premier et/ou le deuxième élément de surface d'afflux est/sont formé/s en partie par une section de paroi de conduite, en particulier une section de paroi de tube.

3. Échangeur de chaleur selon la revendication 1 ou 2,
**caractérisé en ce que**
l'élément de transfert de chaleur (10) est soudé par brasage au premier et/ou au deuxième élément de surface d'afflux ou à la première et/ou deuxième plaque (11, 12).

4. Échangeur de chaleur selon l'une des revendications 1 à 3,
**caractérisé en ce que**
chaque point quelconque à l'intérieur de l'espace accumulateur de froid (19) est situé plus près d'un prochain élément de transfert de chaleur (10) qu'un écart maximal, sachant que l'écart maximal est plus petit qu'un écart de plaque moyen entre les plaques,
sachant qu'un rapport d'écart de plaque à écart maximal est de préférence de quatre, de manière plus préférentielle d'au moins six, de manière encore plus préférentielle d'au moins dix.

5. Échangeur de chaleur selon l'une des revendications précédentes,
**caractérisé en ce que**
au moins un élément de transfert de chaleur (10) présente au moins deux sections espacées l'une de l'autre par un écart de transfert de chaleur, ayant en particulier un tracé parallèle l'une à l'autre, sachant que les sections ont de préférence un tracé sensiblement perpendiculaire à au moins une des plaques (11, 12), sachant que l'écart de transfert de chaleur est de manière plus préférentielle plus petit qu'un écart de plaque des plaques (11, 12), sachant qu'un rapport d'écart de plaque à écart de transfert de chaleur est de manière plus préférentielle d'au moins deux, de manière encore plus préférentielle d'au moins trois, de manière encore plus préférentielle d'au moins cinq.

6. Échangeur de chaleur selon l'une des revendications précédentes,
**caractérisé en ce que**
une surface de liaison, en particulier une surface de liaison de brasage, entre le premier et/ou le deuxième élément de surface d'afflux et/ou la première et/ou la deuxième plaque (11, 12) d'une part et l'au moins un élément de transfert de chaleur (10) d'autre part, représente au moins 10 %, de préférence au moins 20 %, de manière plus préférentielle au moins 30 %, de manière encore plus préférentielle au moins 50 % d'une surface orientée en direction de l'espace accumulateur de froid (19) du premier/deuxième élément de surface d'afflux ou de la première/deuxième plaque (plane).

7. Échangeur de chaleur selon l'une des revendications précédentes,
**caractérisé en ce que**
une zone gaz-gaz (17) est constituée de telle sorte qu'un échange de chaleur puisse être effectué entre du fluide à sécher et un fluide au moins en partie séché.

8. Échangeur de chaleur selon la revendication 7,
**caractérisé en ce que**
un guidage pour le gaz à sécher est défini au moins en partie par au moins une, en particulier au moins deux plaques (11, 12), sachant que le guidage s'étend de préférence au moins en partie à travers la zone gaz-gaz (17) et une zone de réfrigérant à gaz (18) pour l'échange de chaleur entre le fluide à sécher et le réfrigérant.

9. Échangeur de chaleur selon l'une des revendications précédentes,
**caractérisé en ce que**
un tube de réfrigérant (20) cintré en forme de méandre est prévu pour le guidage du réfrigérant, sachant que le tube de réfrigérant (20) est de préférence soudé par brasage entre les deux plaques (11, 12) et que, de manière plus préférentielle, au moins un espace accumulateur de froid (19) ou un espace partiel accumulateur de froid (23) est disposé entre respectivement deux passages de tube.

10. Échangeur de chaleur selon l'une des revendications précédentes,
**caractérisé en ce que**
au moins un guidage de réfrigérant est exécuté comme espace entre au moins deux plaques (11, 12), sachant que les plaques (11, 12) sont de préférence soudées par brasage à au moins un élément de transfert de chaleur (10).

11. Échangeur de chaleur selon l'une des revendications précédentes, en particulier selon la revendication 10,
**caractérisé en ce que**
une plaque de séparation (33) entre réfrigérant et fluide accumulateur s'étend aussi, au moins par sections, via la zone gaz-gaz (17).

12. Échangeur de chaleur selon l'une des revendications précédentes,
**caractérisé en ce que**
au moins deux espaces accumulateurs de froid (19, 23) sont reliés l'un à l'autre sur le plan fluidique par au moins un dispositif de collecte (24) éventuellement disposé sur un côté extérieur, en particulier soudé à celui-ci.

13. Dispositif de séchage à froid, en particulier dispositif de séchage à froid à air comprimé, comprenant un échangeur de chaleur selon l'une des revendications précédentes.
